Europäisches Patentamt

European Patent Office

Office européen des brevets

(11) Publication number: **0 095 002
B1**

(12) **EUROPEAN PATENT SPECIFICATION**

(45) Date of publication of patent specification: **05.11.86**

(51) Int. Cl.⁴: **B 29 C 65/18, B 65 B 13/32**

(21) Application number: **82303905.2**

(22) Date of filing: **23.07.82**

(54) **Improved method of sealing of thermoplastics straps.**

(30) Priority: **24.05.82 GB 8215054**

(43) Date of publication of application:
**30.11.83 Bulletin 83/48**

(45) Publication of the grant of the patent:
**05.11.86 Bulletin 86/45**

(84) Designated Contracting States:
**AT BE CH DE FR GB IT LI LU NL SE**

(56) References cited:
**EP-A-0 022 615
DE-A-2 363 275
DE-A-2 825 068
DE-C-1 285 384
FR-A-2 161 566
GB-A-1 143 442
US-A-3 875 855
US-A-3 906 851
US-A-4 120 239**

(73) Proprietor: **INTERLAKE UK LIMITED
Kilnhurst near Rotherham South Yorkshire S62
5SX (GB)**

(72) Inventor: **Ford, Graham Paul
36 St Matthews Street
Cambridge (GB)**

(74) Representative: **Matthews, Heather Clare et al
Keith W Nash & Co Pearl Assurance House
90-92 Regent Street
Cambridge CB2 1DP (GB)**

Courier Press, Leamington Spa, England.

## Description

### Field of Invention

This invention relates to heat sealing together layers of strap of thermoplastics material such as polyester and polypropylene, and particularly to severing the strap so formed from a reel of strap material.

### Background to the Invention

In the packaging industry, it is a common requirement to tension and secure a thermoplastics strap around the periphery of a package. In order to secure the tensioned loop, two layers of strap must be fixed together where they overlap at the common beginning and end of the loop.

Mechanical fastenings such as metal clips crimped around the two strap layers or deformable wire buckles locking to the two strap layers produce a structurally inefficient joint and are expensive to produce and handle.

Friction welding, wherein a flat or cylindrical pad is oscillated parallel to the plane of contact of the two strap layers in pressure contact therewith can also result in a structurally inefficient joint for some types of strap, especially a strap of polyester and, in addition, an uncomfortable amount of noise is generated. Furthermore, the high power required necessitates use of a compressed air or mains electric drive.

Ultra-sonic welding is equally disadvantageous, being less successful for some types of strap than others, and requiring relatively complex circuitry for providing the necessary operating power.

A known heat sealing process also demands use of a high power source external to the sealing equipment. In this process, a continuously or intermittently heated, relatively massive, heating element is caused to enter between the two layers of strap by moving said element across the strap from one longitudinal edge to the other. The two strap layers are first pressed against the heating element and then, after a short delay, the element is rapidly retracted and the two strap layers are pressed together at the heated regions thereof. This process, in addition to disadvantageously requiring an external power source, produces considerable unpleasant fumes, since the operating temperature rises to a value necessarily higher than the decomposition temperature of the strap material.

After the strap, e.g. drawn from a supply reel, has been looped around a package and the loop tensioned and secured by heat sealing two strap layers together, it is necessary to cut one strap layer, e.g. that extending from the supply reel, without severing the other. The present invention is concerned with this final step of the packaging process.

In the prior art, DE—A—2 825 068 discloses an apparatus for heat sealing together longitudinally overlapping layers of strap (1) of thermoplastics material, comprising a heating and fusing means (8) whereat the two strap layers are brought into fusing relationship, said heating and fusing means including a separator plate (11) which separates the two strap layers at regions closely preceding a heating element located between the strap layers, the heating element being adapted to heat regions of the strap closely following the separated regions, a carriage for reciprocating the heating and fusing means (8) along the length of the overlapping strap layers and a cutting knife (12) for severing one strap layer which extends from a supply reel, whereby the carriage is reciprocated relatively to the knife (12) and the knife can sever the supply reel strap layer, at a point adjacent the fused regions of the strap layers, without severing the other layer.

It is a more specific object of this invention to provide an improved arrangement for the strap severing procedure.

### Summary of the Invention

According to the present invention, there is provided a method of fusing two layers of thermoplastics material comprising the steps of:

(1) effecting relative movement between a heating element subassembly carrying one or more heating elements, and the two material layers, in a forward direction from a home position towards a maximum displacement position;

(2) in advance of the attainment of the maximum displacement position, causing an electric current to flow through the element or elements, so that the latter achieves a fusing temperature at the maximum displacement position;

(3) causing the subassembly to change direction and return from the position of maximum displacement towards the home position and maintaining the flow of current and fusing temperature during the return movement;

(4) in advance of the attainment of the home position, switching off the current and allowing the element or elements to cool to inhibit fusing during the last part of the return movement;

(5) holding the subassembly at the home position for a length of time sufficient to allow the fused bond to become secure;

(6) causing the subassembly to move in the forward direction whilst the current remains OFF into an intermediate position at which one of the elements or a separating plate or other part lies below a knife edge, the said element or plate or part occupying a position between the two layers;

(7) heating the knife edge electrically whilst the subassembly moves towards the intermediate position;

(8) effecting a movement of the knife edge towards the element, plate or part to sever a layer lying between the knife edge and the element, plate or part; and

(9) after severance, removing the heating current from the knife edge and allowing the knife edge to return to its normal position away from the layers of material to be fused, and moving the subassembly in the return direction to its home position once again.

The present invention also provides apparatus for heat sealing together longitudinally overlapping layers of strap of thermoplastics material, in accordance with the afore-described method, comprising a heating and fusing means whereat the two strap layers are brought into fusing relationship, said heating and fusing means including a separator plate which separates the two strap layers at regions closely preceding a heating element located between the strap layers, the heating element being adapted to heat regions of the strap closely following the separated regions, a carriage for reciprocating the heating and fusing means along the length of the overlapping strap layers and a cutting knife for severing one strap layer which extends from a supply reel, characterized in that the carriage is reciprocated relatively to the knife and, at the end of a strap fusing stroke, positions either the separator element or the heating element beneath the knife so that the knife can sever the supply reel strap layer, at a point adjacent the fused regions of the strap layers without severing the other layer; in that the knife edge forms part of a heated knife which is pivotable about a fixed axis, and a cam means acting on the heated knife comprises an operating element carried by a fixed structure and engaging a ramp surface on the carriage in order to produce the severing action of the knife against the separator element or heating element.

Practical apparatus for heat sealing together two layers of thermoplastics strap will now be described by way of example with reference to the accompanying drawings.

In the drawings:

Figure 1 diagrammatically shows a preferred heating element assembly in perspective view,

Figure 2 diagrammatically illustrates a preferred method of heat sealing a thermoplastics strap using the heating element assembly of Figure 1,

Figure 3 shows a simple power circuit for supplying heating current to the heating element,

Figure 4 diagrammatically shows another heating element assembly in perspective view,

Figure 5 diagrammatically shows another embodiment of heating element assembly in perspective view,

Figure 6 shows a further embodiment of heating element assembly,

Figure 7 shows in diagrammatic form a means for supplying electrical power to the heating element assembly,

Figure 8 diagrammatically illustrates one form of apparatus for heat sealing a thermoplastics strap using a heating and fusing assembly incorporating the sub-assembly of Figure 5 which incorporates a cutter, and

Figure 9 is a plan view to an enlarged scale of the cutter shown in Figure 8.

Detailed description of illustrated embodiments

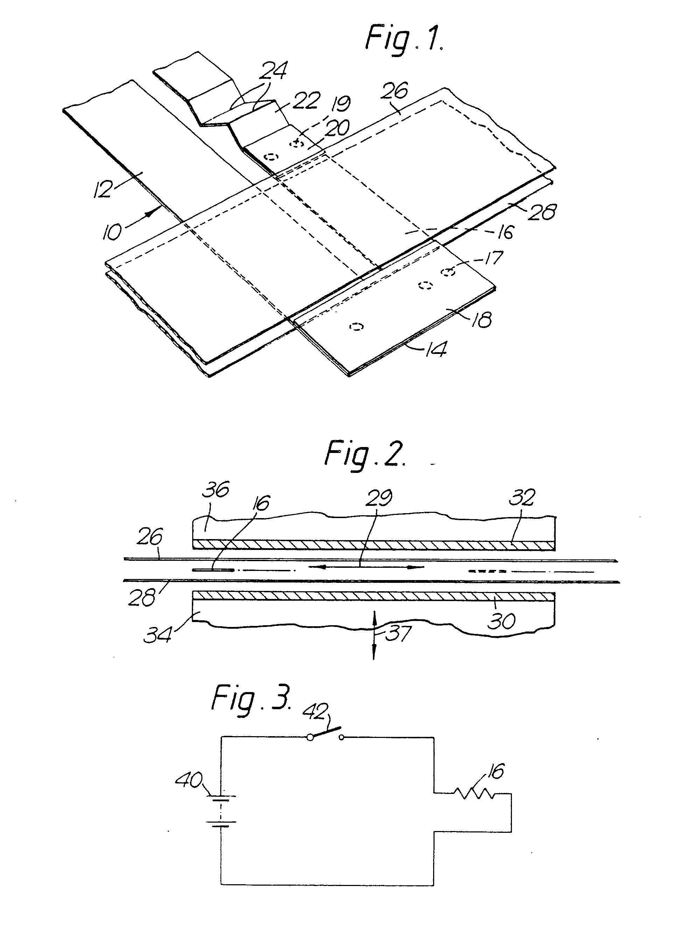

The heating element assembly in Figure 1 comprises a somewhat resilient, flat, L-shaped support 10, conveniently of stainless steel, with a long leg 12 and short leg 14. One end of a thin, flat, heating element 16, made of high resistivity, high temperature alloy such as Inconel, is spot welded, as indicated at 17, to the short leg 14 under a weld pad 18. The other end of the heating element 16 is spot welded, as indicated at 19, under a weld pad 20, to a tensioning element 22. The tensioning element 22, conveniently of stainless steel, is resiliently formed by means of concertina-type folds 24 transverse to its length. The assembly thus forms a U-shape, with the heating element 16 tensioned parallel to the long leg 12 of the L-support 10.

The complete heating element assembly is mounted to a carriage (not shown) disposed to the side of two layers 26, 28 of thermoplastics strap to be heat sealed together, so that the U-shaped assembly, and in particular the heating element 16 (and corresponding part of the long leg 12 of the L-support) can be moved transverse to its length, between the two strap layers, in the longitudinal direction of the strap.

The preferred heating element 16 of Inconel® is conveniently between 0.05 mm and 0.20 mm thick, with a width of about one half its unsupported length between the L-support 10 and the tensioning element 22, the latter corresponding to the width of the strap which the heating element is designed to seal. As compared with conventional heating elements for heat sealing, the element 16 thus possesses a very low thermal mass. In Figures 1 and 2, the electrical leads to the element 16 are omitted.

While the heating element 16 supplied with heating current is moved between the strap layers 26, 28 more particularly by moving the supporting carriage with a forward and reverse motion parallel to the length of the strap, as indicated by arrow 29 in Figure 2, the two strap layers are urged together under a fusing pressure. This fusing pressure is exerted by two resilient pads 30, 32 (see Figure 2), backed by respective rigid supports 34, 36. At least one support, the support 34 for instance and the resilient pad 30 carried thereby, is movable towards the other, as indicated by arrow 37, to enable the fusing pressure to be applied and relieved, as appropriate. Each pad 30, 32 is otherwise stationary, being wide enough to cover the full width of the strap and long enough to cover the entire stroke of reciprocation of the heating element, i.e. to cover the entire heated area of the two layers of strap.

The two layers of strap 26, 28 are thus urged together, with the moving heating element 16 sandwiched therebetween, with a substantially uniform pressure over the entire heated area. Foam rubber is a convenient material for the pads 30, 32.

As indicated in Figure 3, heating current for the heating element 16 is obtained from a source 40 of secondary cells, e.g. rechargeable sealed nickel-cadmium cells, supplied through a switch 42 operable by suitable means (not shown) to open and close in synchronism with the reversals of the forward and reverse motion of the heating element assembly. Thus, the heating element 16 is supplied with current, at least 20 amps from a 1 to 3, e.g. 2.5, voltage source, only during the reverse stroke of the forward and reverse motion. During such reverse stroke, the speed of movement of the heating element is carefully controlled, taking into account the materials involved, so that no part of the heating element assembly is heated as high as the decomposition temperature of the strap material. This is facilitated by use of the thin flat heating element of low thermal mass, the entire heating area of which is sandwiched between the two strap layers under the fusing pressure, so that heat is extracted from the heating element assembly at a rate which maintains the heated regions of the strap layers at a temperature only a little above the melting point of the thermoplastics material concerned.

Preferably, the fusing pressure is applied only during the reverse stroke of the forward and reverse motion of the heating element, while heating is taking place. For this purpose, the pad 30 may be automatically moved to the fusing pressure position at the beginning of a reverse stroke.

At the end of the reverse stroke of the heating element, the heating element assembly is retracted from the heated region of the strap whilst the fusing pressure is maintained until the melted thermoplastics material has resolidified, fusing the two strap layers together. Simultaneously, of course, the heating current is cut off, thereby to ensure that the element does not overheat.

A seal about 30 mm long (along the length of the strap) can be effected in about one second. Such a seal in a typical case will have strength of at least 60 per cent of the parent material. However, means will be provided to adjust the length of seal i.e. the length of the strokes of the forward and reverse movement of the heating element, since some variation of the length of seal will be required in accordance with differing widths of strap.

The above description assumes that a seal can be completed with a single cycle of reciprocation (forward and reverse motion) of motion of the heating element assembly. However, although unlikely to be required, preliminary heating strokes to initiate softening of a thermoplastics material of relatively high melting point can be carried out. In this case, the fusing pressure will be applied only during the final reverse stroke.

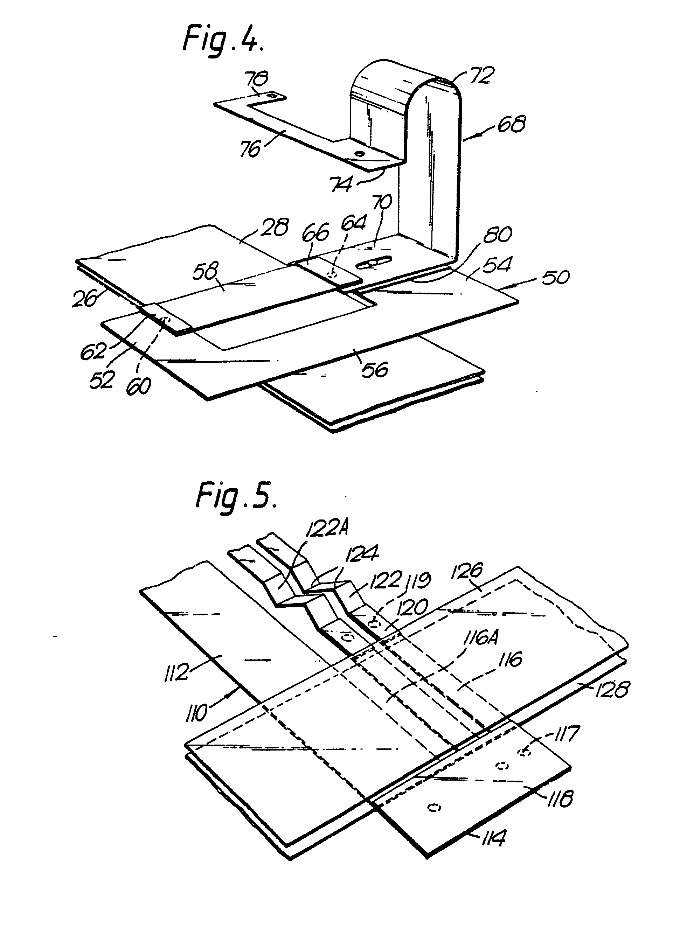

The heating element assembly of Figure 4 comprises a somewhat resilient, flat, U-shaped support 50, conveniently of cold rolled, stainless steel, with short limbs 52 and 54 connected by a longer crosspiece 56. One end of a thin, flat, heating element 58, (corresponding to item 16 in Figure 1) and made of high resistivity, high temperature alloy such as Inconel, is spot welded, as indicated at 60, to the limb 52 under a weld pad 62. The other end of the heating element 58 is spot welded, as indicated at 64, under a weld pad 66, to a tensioning element 68. The tensioning element 68, conveniently of Berylium-copper alloy is formed with a foot 70, to which the heating element 58 is welded at 64, which foot is elongated rearwardly away from the heating element. Upstanding from the foot 70 the tensioning element 68 has an intermediate U-portion 72, the limbs of which can flex towards and away from one another generally in line with the length of the heating element 58, and a forwardly extending end portion 74 which is fixed as by welding to a relatively rigid, electrical contact element 76 of L-shape. The contact element 76 extends generally laterally, with a piece 78 at its most lateral end extending rearwardly to enable anchorage thereof in a manner which tensions the heating element 58. In use, current for the heating element 58 is supplied through this contact element 76 and the spring tensioning element 68. The foot 70 of the tensioning element 68 is therefore electrically insulated, as by an insulating pad 80 over which it can slide, from the limb 54 of the support 50. In use, when the thin heating element 58 expands due to heating thereof, the tensioning element is able to flex to maintain the tension in said heating element which is essential to avoid risk of buckling.

The complete heating element assembly shown in Figure 4 is mounted to a carriage (not shown) disposed to the side of two layers 26, 28 of thermoplastics strap to be heat sealed together, so that the U-shaped assembly, and in particular the heating element 58 (and corresponding part of the long crosspiece 56 of the U-support 50) can be moved transverse to its length, between the two strap layers, in the longitudinal direction of the strap. It is the fixing of the contact element 76 to this carriage which ensures that the heating element 58 is always properly tensioned.

The preferred heating element 58 of Inconel® is conveniently between 0.05 mm and 0.20 mm thick, with a width of at most about one half its unsupported length between the limb 52 of the U-support 50 and the tensioning element 68, the latter being slightly wider than the width of the strap which the heating element 58 is designed to seal. As compared with conventional heating elements for heat sealing, the element 58 thus possesses a very low thermal mass. The electrical leads to the elements 58 and 76 are omitted. Although a range of 0.05 mm to 0.20 mm has been suggested for the element thickness there are many situations where a thicker element would be preferable such as in a bench mounted machine where a thickness of e.g. 0.40 mm or more may be used.

While the heating element 58 supplied with heating current is moving between the strap layers 26, 28 more particularly by moving the supporting carriage with a forward and reverse motion parallel to the length of the strap, in a similar manner as previously described for Figures 1 and 2 the two strap layers are urged together under a fusing pressure. This fusing pressure is exerted by two resilient pads 30, 32 backed by respective rigid supports 34, 36. At least one support, the support 34 for instance and the resilient pad 30 carried thereby, is movable towards the other, as indicated by arrow 37, to enable the fusing pressure to be applied and relieved, as appropriate. Each pad 30, 32 is otherwise stationary, being wide enough to cover the full width of the strap and long enough to cover the entire stroke of reciprocation of the heating element, i.e. to cover the entire heated area of the two layers of strap.

The two layers of strap 26, 28 are thus urged together, with the moving heating element 58 sandwiched therebetween, with a substantially uniform pressure over the entire heated area. Foam rubber is a convenient material for the pads 30, 32.

The heating element assembly of Figure 5 comprises a somewhat resilient, flat, L-shaped support 110, conveniently of stainless steel, with a long leg 112 and short leg 114. One end of each of a pair of thin, flat, elongated heating elements 116, 116A, made of high resistivity, high temperature alloy such as Inconel, is spot welded, as indicated at 117, to the short leg 114 under a weld pad 118. The heating elements 116, 116A are disposed in parallel relationship. The other end of each heating element 116, 116a is spot welded, as indicated at 119, under a weld pad 120, to a corresponding tensioning element 122, 122A. The tensioning elements 122, 122A conveniently of stainless steel, are each resiliently formed by means of concertina-type folds 124 transverse to its length. The assembly thus forms a W-shape, with the heating elements 116, 116A tensioned parallel to the long leg 112 of the L-support 110.

The complete heating element assembly is mounted to a carriage (not shown) disposed to the side of two layers 126, 128 of thermoplastics strap to be heat sealed together, so that the W-shaped assembly, and in particular the heating elements 116, 116A (and corresponding part of the long leg 112 of the L-support) can be moved transverse to its length, between the two strap layers, in the longitudinal direction of the strap.

The preferred heating elements 116, 116A of Inconel® are each conveniently between 0.05 mm and 0.20 mm thick, with a width of at most one quarter its unsupported length between the L-support 110 and the corresponding tensioning element 122, 122A, the latter corresponding to the width of the strap which the heating element is designed to seal. As compared with conventional heating elements for heat sealing, the elements 116, 116A thus possess a very low thermal mass. In Figure 5 the electrical leads to the elements 116, 116A are omitted. Although a range of 0.05 mm to 0.20 mm has been suggested for the element thickness there are many situations where a thicker element would be preferable such as in a bench mounted machine where a thickness of e.g. 0.40 mm or more may be used.

Moreover, as compared to the single heating element proposed earlier the two elements 116, 116A of increased current path length can have increased thickness, for equivalent resistance, or can operate at higher voltage and lower current for the same power.

While the heating elements 116, 116A supplied with heating current are moving between the strap layers 126, 128 more particularly by moving the supporting carriage with a forward and reverse motion parallel to the length of the strap, in the same manner (as indicated in Figure 2), the two strap layers are urged together under a fusing pressure.

The heating current for the heating elements 116, 116A is obtained from a source of secondary cells, e.g. rechargeable sealed nickel cadmium cells, supplied through a switch 42 operable by suitable means (not shown) to open and close in synchronism with the reversals of the forward and reverse motion of the heating element assembly. Thus the heating elements 116, 116A are supplied with current, at least 20 amps, (typically 40A) from a voltage source, of typically 5v only during the reverse stroke of the forward and reverse motion. During such reverse stroke, the speed of movement of the heating elements is carefully controlled, taking into account the materials involved, so that no part of the heating element assembly is heated as high as the decomposition temperature of the strap material. This is facilitated by use of thin flat heating elements of low thermal mass, the entire heating area of which is sandwiched between the two strap layers under the fusing pressure, so that heat is extracted from the heating element assembly at a rate which maintains the heated regions of the strap layers at a temperature only a little above the melting point of the thermoplastics material concerned.

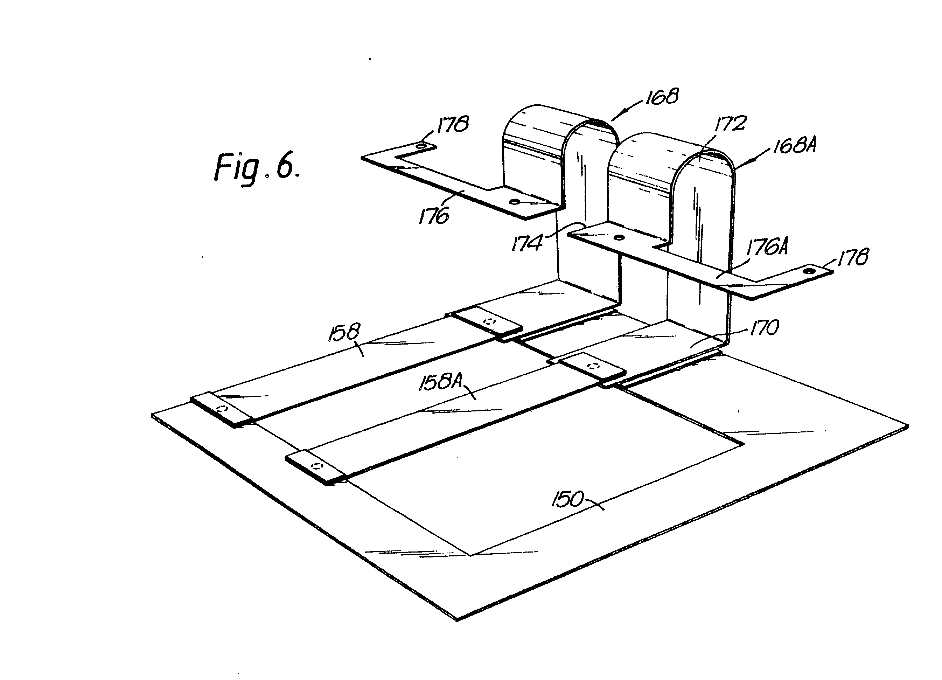

Figure 6 shows a modified heating assembly incorporating a U-shaped tensioning element wherein the tensioning elements 122, 122A of Figure 5 are replaced by springs 168, 168A of the construction illustrated, each having a foot 170, an intermediate U-portion 172 and an end portion 174 which is fixed to or integral with a laterally branched electrical contact 176, 176A. In use, current is supplied to the heating elements 158, 158A through these contacts 176, 176A respectively, the feet 170 of the springs 168, 168A being insulated from the support 150 which is movable by the carriage. The contacts 176, 176A are anchored at 178 in order to maintain tension in the heating elements 158, 158A, even when hot. The contacts 176, 176A conveniently project laterally to opposite sides in order to facilitate non-interfering electrical connections.

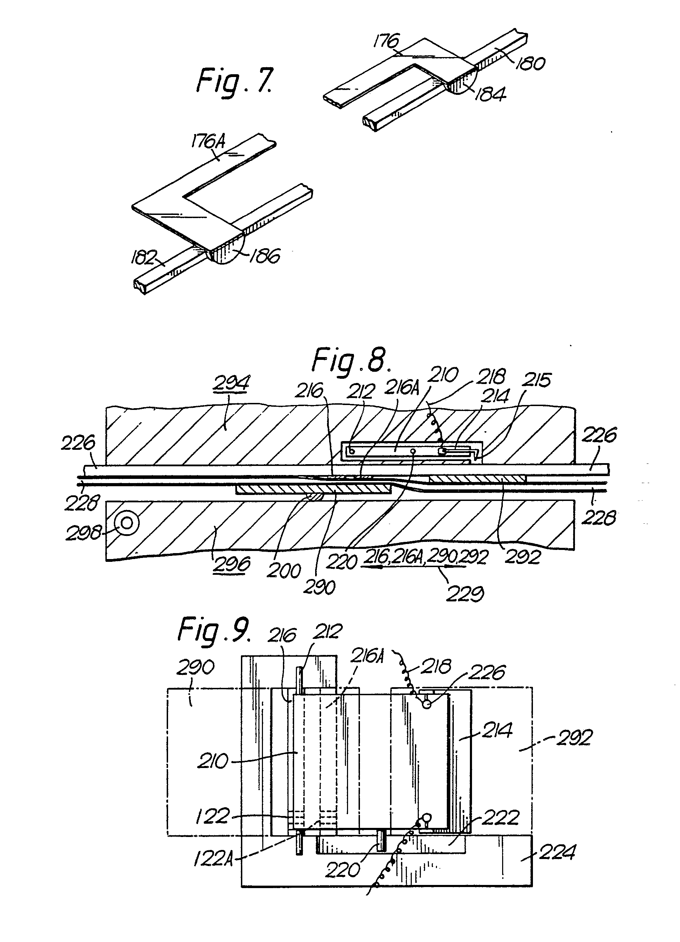

Figure 7 shows a means of anchoring the connectors 176, 176A which at the same time provides the means by which electrical power is supplied to the heating elements.

In Figure 7 two conductor rails 180, 182 are shown which are fixedly carried, parallel to the direction of reciprocation of the heating assembly carriage, by the structure, e.g. tool body, relative to which the carriage is reciprocable. Each connector 176, 176A carries a contact 184, 186, respectively, which engages behind the corresponding rail 180, 182, thus tensioning the springs 168, 168A (see earlier Figures). At the same time the contacts, which are preferably plated with a conductive metal such as silver, platinum, gold, copper or the like, makes electrical engagement with the conductor rails, with a contact pressure corresponding to the tension introduced into the springs. Power is supplied, as from a power circuit of Figure 3, to the conductor rails 180, 182, whereby in use heating current is supplied to the heating elements 158, 158A through the contacts 184, 186 and connectors 176, 176A.

As previously described, current is only supplied during the reverse sense of reciprocation. The forward stroke provides a wiping movement of the contacts 184, 186 along the rails 180, 182 which has a self-cleaning effect.

Although described particularly with reference to the heating element assembly of Figure 6 the current supply means of Figure 7 is also applicable to other heating element assemblies such as those shown in earlier Figures, simply by providing suitable connectors, equivalent to the connectors 176, 176A, on the one or more heating elements or tensioning elements. In this case, however, the connectors may or may not also serve as anchorages for the one or more tensioning elements.

Figure 8 shows diagrammatically the components of a heating and fusing assembly based on the device shown in Figure 5 which is mounted for reciprocable movement. It includes, in addition to the heating element sub-assembly, conveniently references 216, 216A, a stainless steel pressure pad 290 and a stainless steel separator plate 292. The heating and fusing assembly is reciprocable in a plane disposed between upper and lower platens 294, 296. The upper platen 294 is fixed and the lower platen 296, which supports the spring steel pressure plate 290, is pivotable about pivot means 298 to enable the fusing pressure to be applied and to be relieved after heat sealing has been completed. The upper platen 296 can in itself be considered to constitute a fixed pressure pad. Figure 8 is especially concerned with the configuration of the reciprocable assembly when the platens are closed.

First, heating current is supplied to the heating elements 216, 216A only in one sense of the forward and reverse motion, this being the reverse left to right stroke as shown in Figure 8. The separator plate 292 thus acts to separate the two layers of thermoplastics strap 226, 228 before the opposed facing surface regions thereof are heated by the heating elements 216, 216A to effect melting without decomposition of the thermoplastics material. The pressure pad 290, overlaps the heating element sub-assembly 216, 216A, and has mounted on its underside a fulcrum 200 which allows the pad 290 to rock relative to the platen 296. In this way a differential force can be exerted by the pad 290 on the layer

228. The presence of the elements 216, 216A causes the pad 290 to rock in a clockwise manner so as to increase the squeezing pressure on the material trailing the heating elements as the sub-assembly of elements 216, 216A etc., moves to the right, so as to ensure sufficient pressure to cause bonding of the strap material.

As mentioned earlier the heating current for the heating elements 216, 216A connected in series is obtained (as shown in Figure 3) from a source 40 of secondary cells, e.g. rechargeable sealed nickel-cadmium cells, supplied through a switch 42 operable by suitable means (not shown) to open and close in synchronism with the reversals of the forward and reverse motion of the heating element assembly. Thus the heating elements 216, 216A are supplied with current, at least 20 amps, (typically 40A) from a voltage source, of typically 5v only during the reverse stroke of the forward and reverse motion.

Figure 8 also shows a cutter mechanism which is incorporated into the apparatus for severing one strap layer, i.e. that extending from a supply reel, without severing the other, after heat sealing has taken place. Detail of this cutting means is also shown in Figure 9.

An insulating carrier board 210 is carried by a fixed pivot 212 above the line of the strap layers 226, 228 between which is movable the above-described heating and fusing assembly, which includes the heating elements 216, 216A and the separator plate 292. The board 210 carries a knife 214 having a severing edge 215 which extends across the full width of the strap. Flying leads 218 connect to opposite ends of the knife 214 so that severing can be effected, at the appropriate time, by a heated knife edge. This requires less mechanical effort than a mechanical guillotine.

The board 210 is normally spring urged about the pivot 212 so that the knife edge 215 is biased upwardly away from the strap layers beneath it. An actuating finger 220 carried by the board 210 can engage a ramp surface 222 formed on the carriage 224 which effects reciprocation of the heating and fusing assembly. To effect severing, the knife edge 215 is lowered, while heated, under the spring bias by movement of the finger 220 on the ramp surface 222.

In order that the heated knife edge 215 will sever only one layer (the upper layer 226) of the strap layers, its severing action is appropriately synchronised with the forward and reverse movement of the heating and fusing assembly. As previously mentioned, heating and fusing is effected during the reverse stroke of the reciprocation, left to right as shown in Figure 8. The knife assembly is located so that, at the end of this reverse stroke after heating and fusing has been completed, the knife edge 215 is disposed at least approximately above either one of the heating elements 216, 216A or the separator plate 292. (See later description of sub-assembly cycle). This solid element, 216, 216A or 292, thus affords a backing for the knife between the two strap layers 226, 228.

It is important that the knife edge is parallel to the plane of the strap.

It is also to be noted that severing is effected after heating and fusing has been completed, i.e. after the heating current to the heating elements 216, 216A has been switched off. (See sub-assembly cycle description later). The knife 214 is preferably made of Inconel (Registered Trade Mark), which can readily be welded to contacts 226 of berylium copper to which the flying leads 218 are connected. The knife 214 is preferably intermittently heated, by means of a suitable switch synchronised to the reciprocating motion of the carriage.

Heating element sub-assembly cycle:

1. Sub-assembly moves forward (from a home position) to a maximum displaced position.

2. Slightly before reaching this maximum position, the electric current is turned on and the element or elements begin to warm up to the fusing temperature.

3. During the return movement (towards the home position) the high temperature of the element or elements causes the two layers of material to fuse behind it.

4. Just before the sub-assembly reaches the home position the current is switched off thus allowing the element or elements to begin to cool down so inhibiting fusing of the two layers over the final phase of the displacement.

5. The sub-assembly pauses at the home position for a length of time sufficient to allow the bond caused by the fusing to become secure.

6. The sub-assembly is then moved in the forward direction once again, while the current remains OFF, until it occupies an intermediate position in which the element or one of the elements in the separator plate 92 lies under the heated knife edge 215. (Preferably the leading element is located below the edge 215 so as to reduce the length of the tab of unfused material which will be left after securing).

7. The electrical current of the knife edge 215 is initiated as soon as the sub-assembly starts to move towards its intermediate position and after severance the current for the knife edge is turned-off.

8. After severance the sub-assembly moves in the return direction once again to return to its home position, from where the cycle can begin again.

The above described apparatus may be used in a packaging method which comprises the following successive steps: 1) position carton; 2) loop strap around carton; 3) load strap into securing tool; 4) take up slack; 5) tension strap; 6) heating seal/cut-off strap; 7) release. If the device is incorporated into a hand tool, the tool is removed. If it is incorporated in the operating head of a stationary stripping machine, the pack is removed from the machine. Thus, in practice, the illustrated apparatus may be combined with a strap tensioner and strap cutter.

The present invention is applicable to all types of thermoplastics strap, substantially regardless of width, colour or thickness, especially straps up to 30 mm width and 1.5 mm thickness.

Clearly, various modifications are possible within the scope of the invention. For example, the heating element assembly may utilise various metallic materials other than those specified. In particular, the heating element may be made of an austenitic stainless steel or a Brightray alloy. In some circumstances the resilient pads applying the fusing pressure may be replaced by spring-urged, relatively rigid pads, However, for the fusing of straps with crowned or barrel-shaped surfaces across their width, the use of resilient pads will be desirable to ensure close contact between such strap surfaces. The heating element may be maintained under tension in various ways other than a tensioning element having concertina-type folds. In general, various different and modified arrangements are possible in accordance with the invention, the scope of which is defined by the appended claims.

**Claims**

1. A method of fusing two layers of thermoplastics material comprising the steps of:

(1) effecting relative movement between a heating element subassembly (Figure 4 or Figure 5 or Figure 6) carrying one or more heating elements (58 or 116 or 158 or 216), and the two material layers (26, 28 or 126, 128), in a forward direction from a home position towards a maximum displacement position;

(2) in advance of the attainment of the maximum displacement position, causing an electric current to flow through the element or elements, so that the latter achieves a fusing temperature at the maximum displacement position;

(3) causing the subassembly to change direction and return from the position of maximum displacement towards the home position and maintaining the flow of current and fusing temperature during the return movement;

(4) in advance of the attainment of the home position, switching off the current and allowing the element or elements to cool to inhibit fusing during the last part of the return movement;

(5) holding the subassembly at the home position for a length of time sufficient to allow the fused bond to become secure;

(6) causing the subassembly to move in the forward direction whilst the current remains OFF into an intermediate position at which one of the elements (58 or 116 or 158 or 216) or a separating plate (292) or other part lies below a knife edge (215), the said element or plate or part occupying a position between the two layers;

(7) heating the knife edge electrically whilst the subassembly moves towards the intermediate position;

(8) effecting a movement of the knife edge towards the element, plate or part to sever a layer lying between the knife edge and the element, plate or part; and

(9) after severance, removing the heating current from the knife edge and allowing the knife edge to return to its normal position away from the layers of material to be fused, and moving the subassembly in the return direction to its home position once again.

2. A method as claimed in claim 1, wherein the layer of material to be severed is kept under tension during severance.

3. Apparatus for heat sealing together longitudinally overlapping layers (226, 228) of strap of thermoplastics material, in accordance with the method of claim 1, comprising a heating and fusing means whereat the two strap layers are brought into fusing relationship, said heating and fusing means including a separator plate (292) which separates the two strap layers at regions closely preceding a heating element (216, 216A) located between the strap layers, the heating element being adapted to heat regions of the strap closely following the separated regions, a carriage (224) for reciprocating the heating and fusing means along the length of the overlapping strap layers and a cutting knife (215) for severing one strap layer which extends from a supply reel, characterized in that the carriage (224) is reciprocated relatively to the knife (215) and, at the end of a strap fusing stroke, positions either the separator element (292) or the heating element (216, 216A) beneath the knife so that the knife can sever the supply reel strap layer, at a point adjacent the fused regions of the strap layers without severing the other layer; in that the knife edge (215) forms part of a heated knife which is pivotable about a fixed axis (212), and a cam means acting on the heated knife comprises an operating element (220) carried by a fixed structure and engaging a ramp surface (222) on the carriage (224) in order to produce the severing action of the knife against the separator element or heating element.

4. Apparatus as claimed in claim 3, characterized in that the carriage positions the heating element (216, 216A) beneath the knife (215) when the knife severs the strap layer.

**Patentansprüche**

1. Ein Verfahren zum Schmelzen von zwei Lagen aus thermoplastischem Material aus den folgenden Stufen:

(1) Bewirken einer Relativbewegung zwischen einer eine oder mehrere Heizelemente (58 oder 116 oder 158 oder 216) tragenden Heizelement-Unteranordnung (Figur 4 oder Figur 5 oder Figur 6) und den beiden Materiallagen (26, 28 oder 126, 128) in einer Vorwärtsrichtung aus einer Ruhestellung in Richtung auf eine Stellung maximaler Verschiebung;

(2) Bewirken, daß ein elektrischer Strom vor dem Erreichen der Stellung maximaler Verschiebung durch das Element oder die Elemente fließt, so daß die letzteren an der Stelle maximaler Verschiebung eine Schmelz-temperatur erreichen;

(3) Bewirken, daß die Unteranordnung die Richtung ändert und aus der Stellung maximaler Verschiebung in die Ruhestellung zurückkehrt und der Stromfluß und die Schmelztemperatur während der Rückbewegung beibehalten werden;

(4) Abschalten des Stromes und Abkühlen des Elementes oder der Elemente vor dem Erreichen der Ruhestellung, um damit ein Schmelzen während des letzten Teiles der Rückbewegung zu verhindern;

(5) Anhalten der Unteranordnung in der Ruhestellung während einer ausreichend langen Zeit, damit die geschmolzene Verbindung fest werden kann;

(6) Bewirken, daß sich die Unteranordnung bei abgeschaltet bleibendem Strom in der Vorwärtsrichtung in eine Zwischenstellung bewegt, in der eins der Elemente (58 oder 116 oder 158 oder 216) oder eine Trennplatte (292) oder ein anderes Teil unter einer Messerkante (215) liegt, wobei das Element oder die Platte oder das Teil eine Stellung zwischen den beiden Lagen einnehmen;

(7) elektrisches Aufheizen der Messerkante, während sich die Unteranordnung in Richtung auf die Zwischenstellung bewegt;

(8) Bewirken einer Bewegung der Messerkante in Richtung auf das Element, die Platte oder das Teil, um eine zwischen der Messerkante und dem Element, der Platte oder dem Teil liegende Lage durchzutrennen; und

(9) nach dem Durchtrennen Zurücknehmen des Heizstromes von der Messerkante und Rückführen der Messerkante in deren Normalstellung weg von den zu verschmelzenden Materiallagen und Verschieben der Unteranordnung in der Rückkehrrichtung wieder einmal in deren Ruhestellung.

2. Ein Verfahren wie in Anspruch 1 beansprucht, wobei die zu durchtrennende Materiallage während des Durchtrennens unter Spannung gehalten wird.

3. Vorrichtung zum Heißverschweißen von sich in Längsrichtung überlappenden Bandlagen (226, 228) aus thermoplastischem Material in Übereinstimmung mit dem Verfahren nach Anspruch 1, mit einem Heiz- und Schmelzmittel, an dem die beiden Bandlagen in eine schmelzende Beziehung gebracht werden, wobei das Heiz- und Schmelzmittel eine Separatorplatte (292) enthält, die die beiden Bandlagen in Gebieten, die einem zwischen den Bandlagen angeordneten Heizelement (216, 216A) dicht vorausgehen, durchtrennt, das Heizelement Gebiete des Bandes, die den getrennten Gebieten dicht folgen, aufheizen kann, mit einem Wagen (224) zum Hin- und Herbewegen des Heiz- und Schmelzmittels entlang der Länge der sich überlappenden Bandlagen und mit einem Schneidmesser (215) zum Durchtrennen einer Bandlage, die von einer Vorratsrolle ausgeht, dadurch gekennzeichnet, daß der Wagen (224) gegenüber dem Messer (215) hin- und herbewegt wird und am Ende des Bandschmelzhubes entweder das Separatorelement (292) oder das Heizelement (216, 216A) unter das Messer setzt, so daß das Messer die Vorratsrollen-Bandlage an einem Punkt neben den geschmolzenen Gebieten der Bandlagen ohne Durchtrennen der anderen Lage durchtrennen kann; daß die Messerkante (215) einen Teil eines aufgeheizten Messers bildet, das um eine feste Achse (212) schwenkbar ist, und ein auf das aufgeheizte Messer einwirkendes Nockenmittel ein von einer festen Struktur getragenes Betätigungselement (220) ist und mit einer Rampenfläche (222) auf dem Wagen (224) in Anlage steht, um den Trennvorgang des Messers am Separatorelement oder dem Heizelement zu bewirken.

4. Vorrichtung wie in Anspruch 3 beansprucht, dadurch gekennzeichnet, daß der Wagen das Heizelement (216, 216A) unter das Messer (215) setzt, wenn das Messer die Bandlage durchtrennt.

**Revendications**

1. Procédé de soudage à chaud de deux épaisseurs d'un matériau thermoplastique, comprenant les opérations consistant à:

(1) réaliser un mouvement relatif entre un sous-ensemble à éléments chauffants (figure 4 ou figure 5 ou figure 6) supportant un ou plusieurs éléments chauffants (58 ou 116 ou 158 ou 216), et les deux épaisseurs de matériau (26, 28 ou 126, 128), dans une direction vers l'avant en partant d'une position de repos en direction d'une position de déplacement maximal;

(2) avant de parvenir à la position de déplacement maximal, faire circuler un courant électrique dans l'élément ou les éléments de manière que ces derniers parviennent à une température de fusion dans la position de déplacement maximal;

(3) amener le sous-ensemble à changer de direction et à revenir de la position de déplacement maximal vers la position de repos et maintenir la circulation du courant et la température de fusion pendant le mouvement de retour;

(4) avant de parvenir à la position de repos, couper le courant et permettre à l'élément ou aux éléments de refroidir pour inhiber la fusion pendant la dernière partie du mouvement de retour;

(5) maintenir le sous-ensemble dans la position de repos pendant une durée suffisante pour permettre à la liaison par soudure de devenir résistante;

(6) amener le sous-ensemble à se déplacer dans la direction vers l'avant alors que le courant reste coupé vers une position intermédiaire pendant laquelle les éléments (58 ou 116 ou 158 ou 216), ou une plaque séparatrice (290), ou une autre pièce, sont disposés au-dessous de l'arête (215) d'un couteau, ledit élément, ou plaque ou pièce occupant une position entre les deux épaisseurs;

(7) chauffer électriquement l'arête du couteau pendant que le sous-ensemble se déplace vers la position intermédiaire;

(8) faire effectuer un mouvement à l'arête du couteau en direction de l'élément, de la plaque ou de la pièce pour sectionner une épaisseur située entre l'arête du couteau et l'élément, la plaque ou la pièce; et

(9) après sectionnement, couper le courant de chauffage de l'arête du couteau pour permettre à l'arête du couteau de revenir à sa position normale qui est éloignée des épaisseurs de matériau à souder par chauffage, et déplacer le sous-ensemble dans la direction de retour pour le ramener à nouveau à sa position de repos.

2. Procédé selon la revendication 1, caractérisé en ce que l'épaisseur de matériau à sectionner est maintenue sous tension pendant la sectionnement.

3. Dispositif pour souder à chaud des épaisseurs (226, 228) de ruban en matière thermoplastique se chevauchant mutuellement dans le sens longitudinal, conformément au procédé de la figure 1, comprenant un moyen de chauffage et de fusion grâce auquel les deux épaisseurs de ruban sont amenées à fondre ensemble, ledit moyen de chauffage et de fusion comprenant une plaque séparatrice (292) qui sépare les deux épaisseurs de ruban dans des régions précédant étroitement un élément chauffant (216, 216A) situé entre les épaisseurs de ruban, l'élément chauffant étant apte à chauffer des régions du ruban qui suivent étroitement les régions séparées, un chariot (224) pour faire effectuer un mouvement de va-et-vient au moyen chauffant et de fusion le long de la longueur des épaisseurs de ruban en chevauchement et un couteau (215) pour sectionner une épaisseur de ruban qui s'étend à partir d'une bobine d'alimentation, caractérisée en ce que le chariot (224) est entraîné en va-et-vient par rapport au couteau (215) et, à la fin d'une course de fusion du ruban, positionne soit l'élément séparateur (292) soit l'élément chauffant (216, 216A) au-dessous du couteau de manière que le couteau puisse sectionner l'épaisseur de ruban provenant de la bobine d'alimentation, en un point adjacent aux régions fondues des épaisseurs de ruban, sans sectionner l'autre épaisseur; en ce que l'arête (215) du couteau fait partie d'un couteau chauffé qui peut pivoter autour d'un axe fixe (212), et un moyen à came agissant sur le couteau chauffé comprend un élément de manoeuvre (220) supporté par une structure fixe et en contact avec une surface de rampe (222) sur le chariot (224) pour produire l'action de sectionnement du couteau contre l'élément séparateur ou l'élément chauffant.

4. Dispositif selon la revendication 3, caractérisé en ce que le chariot positionne l'élément chauffant (216, 216A) au-dessous du couteau (215) lorsque le couteau sectionne l'épaisseur de ruban.

Fig.1.

Fig.2.

Fig.3.

## Fig.4.

## Fig.5.

2

Fig. 6.

Fig. 7.

Fig. 8.

Fig. 9.